(19) **Europäisches Patentamt / European Patent Office / Office européen des brevets**

(11) **EP 4 478 096 A1**

(12) **EUROPEAN PATENT APPLICATION**

(43) Date of publication:
**18.12.2024 Bulletin 2024/51**

(51) International Patent Classification (IPC):
**G02B 5/10** *(2006.01)* **G02B 27/00** *(2006.01)*
**G02B 27/09** *(2006.01)*

(21) Application number: **24181872.3**

(22) Date of filing: **13.06.2024**

(52) Cooperative Patent Classification (CPC):
**G02B 5/10; G02B 27/0012; G02B 27/0983**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.06.2023 CZ 20230238**

(71) Applicant: **Západočeská univerzita v Plzni 301 00 Plzen (CZ)**

(72) Inventors:
• **MOSKAL, Denys**
  **301 00 Plzen (CZ)**
• **MARTAN, Jiri**
  **332 09 Stenovice (CZ)**
• **LANG, Vladislav**
  **323 00 Plzen (CZ)**
• **HONNER, Milan**
  **323 00 Plzen (CZ)**

(74) Representative: **Cerych, Ondrej Narodni 58/32 110 00 Prague 1 (CZ)**

(54) **MIRROR FOR FOCUSING ELECTROMAGNETIC RADIATION, METHOD FOR FOCUSING ELECTROMAGNETIC RADIATION AND CONVERTING ELECTROMAGNETIC RADIATION INTO AN ELECTRICAL SIGNAL, AND DEVICE FOR FOCUSING ELECTROMAGNETIC RADIATION AND CONVERTING ELECTROMAGNETIC RADIATION INTO AN ELECTRICAL SIGNAL**

(57) The invention relates to a mirror for focusing electromagnetic radiation. The essence of the invention is that a reflective mirror surface 6 is established on a supporting structure, created by the rotation of elliptical arcs, where the first foci $C_1$ of all elliptical arcs lie on one line and the second foci $\overline{C_2}$ of all elliptical arcs lie at one fixed point. Each elliptical arc is a part of an ellipse described in a Cartesian coordinate system *(x, y, z)* by the following equation:

$$y^2 = b^2 \left( 1 - \frac{x^2}{b^2 + c(z)^2} \right)$$

where z is independent of *x* and *y*, *c(z)* is the focal distance of the rotated elliptical arcs dependent on z, b is the minor axis of the ellipse, and each ellipse has the same position of the second focus at the point (*x = -c, y = 0, z = 0*). Each ellipse is rotated around the rotational line 4 (*x = -c, y, z = 0*), where c is the focal distance corresponding to the distance from the focus to the center of the ellipse placed in the plane {*x, y, 0*}. Each point in the series $C_1(z)$ of the first foci of the rotated elliptical arcs is positioned on the focal line.

The invention also relates to a method for focusing electromagnetic radiation and converting it into an electrical signal. The essence of the method is that the above-defined reflective mirror surface focuses radiation from a line source placed parallel to the series of first foci of the rotated elliptical arcs to at least one point on a line parallel to the second focal line. The intensity of the electromagnetic radiation is detected at this point and converted into an electrical signal by changing the electrical characteristic of a photosensitive element in the detector, from which the course of the electromagnetic radiation in time and space is determined.

The invention further relates to a device for focusing electromagnetic radiation and converting it into an electrical signal. The essence of the device is that the mirror body 7, on its supporting structure, has the above-defined reflective mirror surface 6. At least one detector 13 of electromagnetic radiation is associated with this mirror body, placed on a line parallel to the second focal line, and connected to a recording device 20.

**EP 4 478 096 A1**

## Description

Field of Technology

The presented invention generally relates to optical elements, specifically the design of elliptical mirrors for focusing electromagnetic radiation from a point source into a line image on a projection surface and inversely focusing electromagnetic radiation from a line source into a point, as well as the method for focusing electromagnetic radiation and converting electromagnetic radiation into an electrical signal and a device for focusing electromagnetic radiation and converting electromagnetic radiation into an electrical signal.

Background Art

There are several techniques for creating a straight line image by focusing a parallel laser beam. Examples include Powell lens according to US 4826299 (I. Powell) or scanner with polygonal mirrors according to US 9041762 B2 (H. Bai, R. A. Hajjar), or telecentric mirrors according to EP 2 691 803 B1 (Lee K. Galbraith). The disadvantage of these solutions is the necessity of using a parallel laser beam.

To focus a laser beam into a curved line, galvanometric scanners can be used according to J. Montagu, Galvanometric and resonant scanners, NY 2004, pp. 417-476. The disadvantage of this solution is the use of moving mechanical parts that require motors for movement, electrical power, control electronics, control software, and skilled operation.

Diffractive optics can also be used according to Wide-fan-angle Flat-top Linear Laser Beam Generated by Long-pitch Diffraction Gratings, Current Optics and Photonics, vol. 5, no. 5, October 2021, pp. 500-505 (M. H. Lee et al.), its limitation is that it is used only for a narrow range of defined wavelengths. Both of the above solutions also require a parallel laser beam.

To create a line image from a point source with a spherical radiation distribution, cylindrical lenses can be used according to: JP H0557475 A (N. Yukio U. Yuji) or Flat-Top Line-Shaped Beam Shaping and System Design. Sensors 2022, 22, 4199. (C. Liu, Y. Guo). This solution is limited by the spectral transmittance of the material used for the cylindrical lenses, another disadvantage is the geometric size of such a solution, as lenses with a large numerical aperture have dimensions in tens of centimeters.

Radiation emitted by a long line source can be focused into a point by the inverse application of a cylindrical lens. This solution is limited by the spectral transmittance of the material used for the cylindrical lenses and the need for a large numerical aperture of the lens, which can only be achieved with geometrically large cylindrical lenses. It is particularly difficult to focus infrared thermal radiation emitted by long line sources of heat, for example, a line source of heat created on the surface of a material by a laser in conjunction with scanning optics.

Another solution for creating line images from a point source can be realized by combining several mirrors, Flat-Top Line-Shaped Beam Shaping and System Design. Sensors 2022, 22, 4199 (W.-H. Lee, W. Lee). In this case, radiation from the source is reflected off a parabolic mirror and then as a parallel beam reflected off a cylindrical mirror and focused on the surface in a line form. The disadvantage of such a solution is the need for multiple mirrors that occupy a large workspace.

Another possible solution is the use of a mirror composed of several smaller coaxial conical mirrors arranged so that individual point images of the mirrors form a line according to US 5,285,320 (G. Hohberg). The limitation of this solution is the coaxial arrangement of the created line, which is not continuous, and there is no direct functional relationship between the curvature of the mirror and the shape of the reflected light point.

The method of focusing electromagnetic radiation using mirrors and lenses is described in patent application WO 2022/2184551 A1 (J. Martan, D. Moskal, M. Honner, C. B. Beltrami, V. Lang). Electromagnetic radiation emitted from one point is measured; for measuring electromagnetic radiation emitted from multiple points, scanning optics based on the mechanical positioning of mirrors must be used. Any mechanical moving system has speed limitations, requires control electronics, software, and qualified operation. It is also a frequent source of failures compared to other parts of the measuring device. Another possibility for detecting electromagnetic radiation from large areas is the use of CCD cameras; in the case of detecting radiation in the infrared wavelength spectrum, an infrared wavelength camera must be used according to US 20120183915 A1 (N. Merry, S. Moffatt, K. Patalay, D. K. Carlson). The limitation of using cameras is the low recording speed, up to hundreds of kHz.

Devices for focusing electromagnetic radiation are designed as complex enclosed assemblies, such as a microscope, which is a fully usable device without the need for additional components, or as an open assembly where some elements can be removed and replaced, such as a spectrometer, or as an incomplete assembly requiring additional optical elements to ensure focusing of electromagnetic radiation on the detector. Most of the mentioned devices are equipped with more than one optical element; if lenses and prisms are involved, individual optical errors of these elements are amplified, with a clear limitation on passing wavelengths determined by the material of the lenses and prisms. If the devices are equipped with mirrors, they usually consist of a system of mirrors that must be movable to ensure the capture of electromagnetic radiation from a line, and the necessary components of the device include motors moving the mirrors, control electronic circuits for the motors, and software for controlling the entire assembly. Electromagnetic radiation is mostly focused by mirrors into a single point, which does not allow measurement by multiple detectors at the same time.

## Summary of the Invention

The objective of the invention is to provide a mirror that can focus radiation emitted from a line source into a point image and can also spread a spherical beam from a point source into a line image. The mirror according to the invention addresses both tasks, i.e., it reflects radiation from a point spherical source into a line image and inversely focuses radiation from a line source into a point or a field of points.

The invention addresses problems associated with focusing radiation from a point source into a line image of a straight line or a curved line with at least one special mirror, and also the inverse task of focusing radiation from a line source into a point using at least one mirror.

The essence of the mirror for focusing electromagnetic radiation is that a reflective mirror surface is mounted on a support structure, formed by the rotation of elliptical arcs, where the first foci of all elliptical arcs lie on one line and the second foci of all elliptical arcs lie in one fixed point, with each elliptical arc being a part of an ellipse described in the Cartesian coordinate system (x, y, z) by the following equation:

$$y^2 = b^2 \left( 1 - \frac{x^2}{b^2 + c(z)^2} \right)$$

where $z$ is independent of $x$ and $y$, $c(z)$ is the focal length of the rotated elliptical arcs dependent on $z$, $b$ is the semi-minor axis of the ellipse, and each ellipse has the same position of the second focus at the point $x = -c$, $y = 0$, $z = 0$), and each ellipse is rotated around the rotational axis ($x = -c$, $y$, $z = 0$), where c is the focal distance corresponding to the distance of the focus from the center of the ellipse located in the plane $\{x, y, 0\}$, with each one of the points of the series of first foci of the rotated elliptical arcs being located on the focal line.

The line of the first foci of all elliptical arcs in the Cartesian coordinate system is preferably a straight line ($x = c$, $y = 0$, $z$) or a curve described in the Cartesian coordinate system by two independent functions ($x = f_1(z)$, $y = f_2(z)$, $z$).

The reflective mirror surface is preferably made of highly reflective metal, such as aluminum, copper, or gold, or from dielectric material, such as silicon dioxide or silicate glass or ceramics.

The essence of the method for focusing the intensity of electromagnetic radiation and converting electromagnetic radiation into an electrical signal according to the invention lies in the fact that the reflective mirror surface is formed by the rotation of elliptical arcs, where the first foci of all elliptical arcs lie on one line, and the second foci of all elliptical arcs lie in one fixed point, with each elliptical arc being a part of an ellipse described in the Cartesian coordinate system (x, y, z) by the following equation:

$$y^2 = b^2 \left( 1 - \frac{x^2}{b^2 + c(z)^2} \right)$$

where $z$ is independent of $x$ and $y$, $c(z)$ is the focal distance of the rotated elliptical arcs depending on $z$, $b$ is the minor axis of the ellipse, and each ellipse has the same position of the second focus at the point ($x = -c$, $y = 0$, $z = 0$). Each ellipse is rotated around the rotational axis ($x = -c$, $y$, $z = 0$), where c is the focal distance corresponding to the distance of the focus from the center of the ellipse placed in the plane $\{x, y, 0\}$. Each point of the series of first foci of the rotated elliptical arcs is placed on the focal line. Radiation from a line source, which is placed parallel to the series of first foci of the rotated elliptical arcs, is focused into at least one point, which is placed on a line parallel to the second focal line, where the intensity of the electromagnetic radiation is measured and converted into an electric signal by changing the electrical characteristic of the photosensitive element in the detector, from which the course of the electromagnetic radiation in time and space is determined.

The electromagnetic radiation is thermal radiation in the wavelength range of 0.1 $\mu$m to 14 $\mu$m.

The dynamics of the pulses of electromagnetic radiation are determined in time durations ranging from femtoseconds to milliseconds.

Electromagnetic radiation is focused on several detectors, where at least one detector records the intensity of electromagnetic radiation in short time intervals, ranging from femtoseconds to nanoseconds, and at least one detector records the intensity of electromagnetic radiation in longer time intervals ranging from nanoseconds to several seconds.

The device for focusing the intensity of electromagnetic radiation and converting electromagnetic radiation into an electrical signal according to the invention comprises at least one reflective mirror surface, formed by the rotation of elliptical arcs, where the first foci of all elliptical arcs lie on one line, and the second foci of all elliptical arcs lie in one fixed point, with each elliptical arc being a part of an ellipse described in the Cartesian coordinate system (x, y, z) by the following equation:

$$y^2 = b^2 \left( 1 - \frac{x^2}{b^2 + c(z)^2} \right)$$

where $z$ is independent of $x$ and $y$, $c(z)$ is the focal length of the rotated elliptical arcs dependent on $z$, $b$ is the semi-minor axis of the ellipse, and each ellipse has the same position of the second focus at the point ($x = -c, y = 0, z = 0$), and each ellipse is rotated around the rotational axis ($x = -c, y, z = 0$), where c is the focal distance corresponding to the distance of the focus from the center of the ellipse located in the plane {$x, y, 0$}, with each one of the points of the series of first foci of the rotated elliptical arcs being located on the focal line, and at least one electromagnetic radiation detector placed on a line parallel to the second focal line and connected to a recording device.

Preferably, the device is equipped with an amplifier placed between at least one detector and the recording device.

Preferably, the device is equipped with an analog-to-digital converter established before the recording device.

Preferably, the device is equipped with a display device connected to the analog-to-digital converter.

Preferably, the device is equipped with detectors with non-overlapping spectral ranges.

Preferably, the device is equipped with detectors with partially overlapping spectral ranges.

The main advantage of the invention lies in focusing radiation into a line image from a point or spherical radiation source, not just from a laser source, with the mirror also functioning in an inverse mode, focusing radiation from a line source into at least one point. The mirror according to the invention addresses both tasks: reflecting radiation from a spherical point source into a line image and inversely concentrating radiation from a line source into a point or a field of points.

Another advantage of the invention lies in focusing radiation from a point or spherical source into a line image without moving mechanical parts, energy sources, control elements, motors, and software. It does not require an operator trained to handle scanning systems.

Mirrors according to the invention operate in a broad spectral characteristic of focused light due to the reflective principle of focusing compared to refractive or diffractive optical elements, such as lenses, refractive prisms, and diffraction gratings.

The mirror according to the invention exhibits a thin reflective surface construction, occupying a small working space compared to other optical elements with the same numerical aperture.

The mirror according to the invention has a one-piece construction, eliminating the need for additional frames or sleeves, and it can be constructed directly with mounting elements.

The mirror according to the invention allows creating the shape of the reflective surface so that radiation from a point or spherical source is focused into a chosen line image without the need for multiple separate mirrors.

The main advantage of the focusing method with the invented mirror is the possibility of using a single optical path for a spectrum of wavelengths from ultraviolet through the visible spectrum to infrared.

Another benefit is the simplicity of the optical path assembly of the device according to the invention, as it consists only of the invented mirror and one or more detectors.

The advantage of the focusing method according to the invention is that the entire line is focused on the detector, with its length determined by the width of the mirror according to the invention.

The main advantage of the device for focusing electromagnetic radiation lies in its compact and robust design, as the optical path can be realized with at least one optical element, that is, the mirror according to the invention.

Another advantage of the device according to the invention is the absence of mechanically moving parts and the possibility of equipping the device with several detectors for simultaneous measurement of signal intensity in different intervals of the electromagnetic spectrum.

Brief Description of the Drawings

The invention is further explained in the following detailed description with reference to the accompanying drawings, in which:

Fig. 1 shows a perspective view of the reflective mirror surface according to the invention.

Fig. 2 shows a sectional view of the reflective mirror surface according to the invention.

Fig. 3 shows a diagram of the method for focusing the intensity of electromagnetic radiation according to the invention.

Fig. 4 shows a schematic view of the device for focusing the intensity of electromagnetic radiation and converting electromagnetic radiation into an electrical signal according to the invention.

Fig. 5 shows a schematic view of another embodiment of the device according to the invention.

Fig. 6 shows a schematic view of the method for focusing the intensity of electromagnetic radiation and converting electromagnetic radiation into an electrical signal according to the invention.

Fig. 7 shows a perspective view of the reflective mirror surface with detectors according to the invention.

Fig. 8 shows a perspective view of the reflective mirror surface with detectors according to another embodiment of the invention.

Fig. 9 shows a perspective view of the reflective mirror surface with detectors according to yet another embodiment of the invention.

Fig. 10 shows a schematic view of the method for focusing the intensity of electromagnetic radiation and converting electromagnetic radiation into an electrical signal according to the invention.

Fig. 11 illustrates the creation of a reflective mirror surface by rotating elliptical arcs in both clockwise and counterclockwise directions around the rotational axis with the movement of the first focus along a curved line.

Fig. 12 illustrates the time course of the intensity of detected infrared thermal radiation during laser scanning.

Fig. 13 illustrates the practical implementation of a multi-elliptical mirror from the front view.

Fig. 14 illustrates the practical implementation of a multi-elliptical mirror from the rear view.

Fig. 15 illustrates the distribution of radiation intensity along the first focal line when a point radiation source is placed in the second focus of the multi-elliptical mirror.

Fig. 16 illustrates the schematic arrangement of a device for detecting the intensity of electromagnetic radiation using a multi-elliptical mirror.

Exemplary Implementation of the Invention

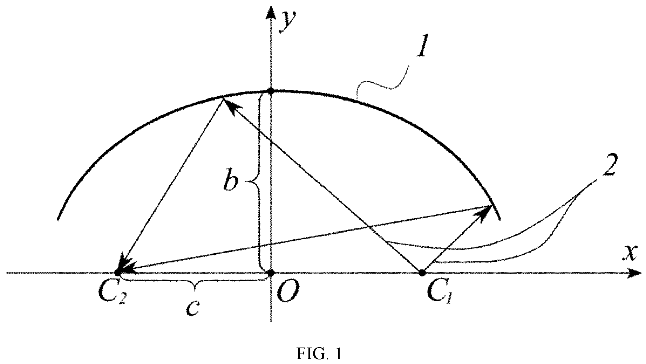

The mirror according to the invention, which addresses the aforementioned objectives, is based on the properties of an ellipse. In Figure 1, a typical focusing of electromagnetic radiation by an elliptical arc 1 in the plane $\{x, y, z = 0\}$ with the minor axis of the ellipse $b$, the first focus $C_1$ of the elliptical arc, and the second focus $C_2$ of the elliptical arc, is shown. These are parts of the ellipse. A point source of electromagnetic radiation is located at the first focus $C_1$ of the elliptical arc.

Rays 2, which are emitted by the point source placed at the first focus $C_1$ of the elliptical arc, are reflected from the surface of the elliptical arc 1 and then focused on the second focus $C_2$ of the elliptical arc. This applies to all rays that are emitted from the source point located at the first focus $C_1$ of the elliptical arc and which are emitted towards the elliptical arc 1 in the plane $\{x, y, z = 0\}$ - all rays will be focused on the second focus $C_2$ of the elliptical arc.

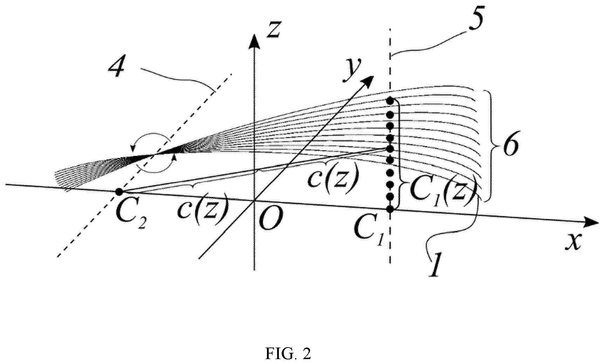

By rotating the elliptical arc 1 counterclockwise, as shown in Figure 2, around the rotation line 4 ($x = -c, y, z = 0$) for the rotation of the ellipse with the displacement of the first focus $C_1$ of the elliptical arc along the first focal line 5 ($x = c, y = 0, z \geq 0$), a series of points $C_1(z)$ of the first foci of the rotated elliptical arcs is created, which is thus a function of the variable $z$. The distance between the second focus $C_2$ and the individual points of the series $C_1(z)$ of the first foci of the rotated elliptical arcs gradually increases. Each of the points in the series $C_1(z)$ of the first foci of the rotated elliptical arcs still lies on the first focal line 5. The resulting surface is thus composed of a multitude of elliptical arcs with variable focal distance $c(z)$. Such a multi-elliptical structure has a series of foci (individual points of the series $C_1(z)$ of the first foci of the rotated elliptical arcs) along one line on one side and a fixed focus (the second focus $C_2$ of the elliptical arc) on the other side. The surface created by the multi-elliptical structure thus functions as a focusing mirror. Electromagnetic radiation emitted in the plane of the elliptical arc 1 from a point lying on the first focal line 5 ($x = c, y = 0, z \geq 0$) is reflected by the multi-elliptical mirror and focused into the second focus $C_2$ of the elliptical arc ($x = -c, y = 0, z = 0$).

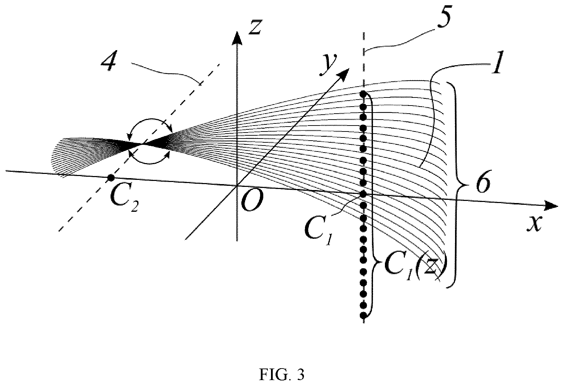

The rotation of the elliptical arc 1 can be realized both counterclockwise and clockwise, as shown in Figure 3, around the rotation line 4 ($x = -c, y, z = 0$) for the rotation of the ellipse with the displacement of the first focus $C_1$ of the elliptical arc along the first focal line 5 ($x = c, y = 0, z$). A broader multi-elliptical structure is created compared to Figure 2, forming a reflective mirror surface 6, and having individual points of the series $C_1(z)$ of the first foci of the rotated elliptical arcs along the first focal line 5 on one side and one common second focus $C_2$ of the elliptical arcs. In the same logic as in the case of the multi-elliptical mirror shown in Figure 2, the broader multi-elliptical mirror focuses electromagnetic radiation emitted from points on the first focal line 5 ($x = c, y = 0, z$) to the point of the second focus $C_2$ of the elliptical arcs ($x = -c, y = 0, z = 0$) on the other side of the mirror. In this way, the requirement for focusing electromagnetic radiation from a linear source into a single focal point is solved.

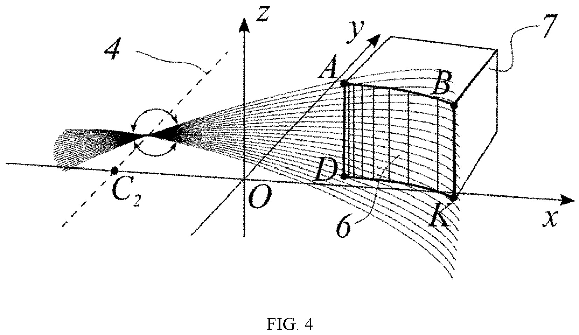

The creation of an optical element with a multi-elliptical reflective mirror surface is shown in Figure 4. From the mirror body 7, a part is cut out, forming the reflective mirror surface 6, which is bounded by the points $ABKD$. The dimensions of the mirror body 7 and the part of the reflective mirror surface 6 bounded by the points $ABKD$ are based on specific needs and specific uses of the created mirror. The distance of the cutting area from the $y$-axis depends on whether an off-axis mirror or an on-axis mirror needs to be created.

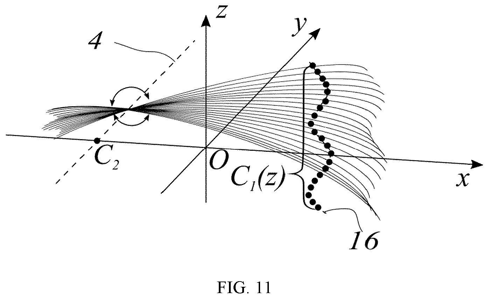

The line of the first foci of all elliptical arcs in the Cartesian coordinate system is advantageously a straight line ($x = c, y = 0, z$) or a curve, which is described in the Cartesian coordinate system by two independent functions ($x = f_1(z), y = f_2(z), z$). This is shown in Figure 11, where by parameterizing the position of the foci of the elliptical arcs, the positions of the individual points of the series $C_1(z)$ of the first foci of the rotated elliptical arcs can be changed so that they do not lie on the first focal line 5, but on an arbitrarily curved line 16, as shown in Figure 11. In this case, the multi-elliptical mirror is created by rotating the elliptical arc 1 around the rotation line 4 for the rotation of the ellipses with the displacement of the position of the first focus $C_1$ of the elliptical arcs in the x and y directions according to the functions $x = f_1(z)$, $y = f_2(z)$, where $f_1$ and $f_2$ can be, for example, trigonometric functions, sine or cosine, parabola, hyperbola, and similar. One of the functions can also be a constant, and the other then depends on the variable z. Such a multi-elliptical mirror creates an image from a point source on the left side to a curved line 16 on the right side. Conversely, electromagnetic radiation emitted by a field of point sources, which are arranged on a predetermined curve, for example, $x = f_1(z)$, $y = f_2(z)$, will be focused on the left side at the second focus $C_2$ of the elliptical arcs.

The reflective mirror surface ABKD can be made of metal, for example, aluminum, nickel, gold, copper, and other metals, or from dielectric material, such as quartz glass or glass-ceramics and others.

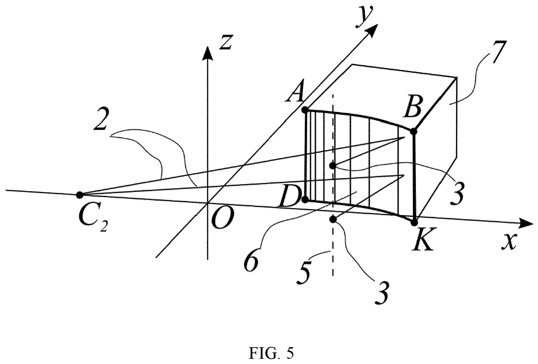

An off-axis multi-elliptical mirror has the ability to concentrate electromagnetic radiation emitted from the first focal line 5 ($x=c$, $x = c$, $y = 0$, $z$) to the second focus $C_2$ of the elliptical arc. In Figure 5, there is an example of focusing electromagnetic radiation from any point source 3 of electromagnetic radiation, which lies on the first focal line 5 ($x = c$, $y = 0$, $z$) and emits towards the elliptical arc. The corresponding rays after reflection from the part of the reflective mirror surface 6 bounded by the points ABKD are focused into the point of the second focus $C_2$ of the elliptical arc. Conversely, electromagnetic radiation emitted from a point source at the second focus $C_2$ of the elliptical arc is focused on the first focal line 5 ($x = c$, $y = 0$, $z$).

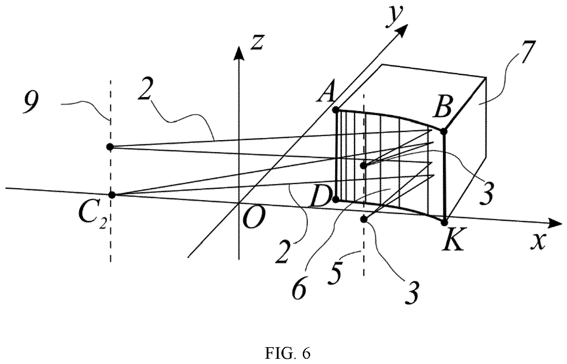

The same principle applies to any electromagnetic radiation emitted from a point source that lies on the first focal line 5 ($x = c$, $y = 0$, $z$) - electromagnetic radiation is focused on the corresponding point lying on the second focal line 9 ($x = -c$, $y = 0$, $z$), as shown in Figure 6, and conversely, electromagnetic radiation emitted from a point source lying on the second focal line 9 ($x = -c$, $y = 0$, $z$) is focused on the first focal line 5 ($x = c$, $y = 0$, $z$).

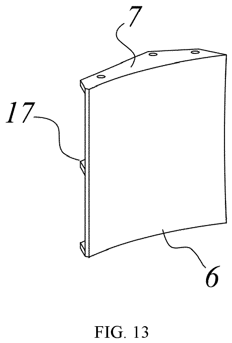

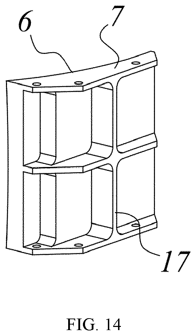

An exemplary realization of the mirror body 7 with an effective reflective mirror surface 6 is shown in Figures 13 and 14. The dimensions of one developed and tested multi-elliptical mirror for detecting infrared thermal radiation with laser-created laser lines 10 were as follows: 14 cm wide, corresponding to the lengths of the segments AD and BK of the part of the reflective mirror surface 6 bounded by the points ABKD in Figure 5, 14 cm long, corresponding to the lengths of the segments AB and DK of the part of the reflective mirror surface 6 bounded by the points ABKD in Figure 5, and 6 cm deep, corresponding to the thickness of the mirror body 7 in Figure 5. The central elliptical arc, which lies in the plane {x, y, z = 0}, has a major axis length of 22 centimeters and a minor axis length of 17 centimeters. The multi-elliptical mirror viewed from the part of the reflective mirror surface 6 bounded by the points ABKD is shown in Figure 13. The mirror body 7 is not realized as a solid volume but is designed as hollow with rib reinforcements 17, as shown in Figure 14.

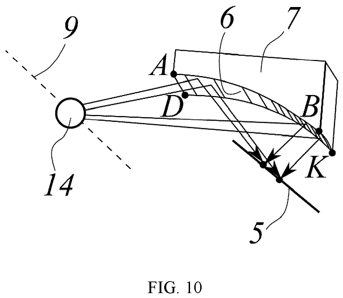

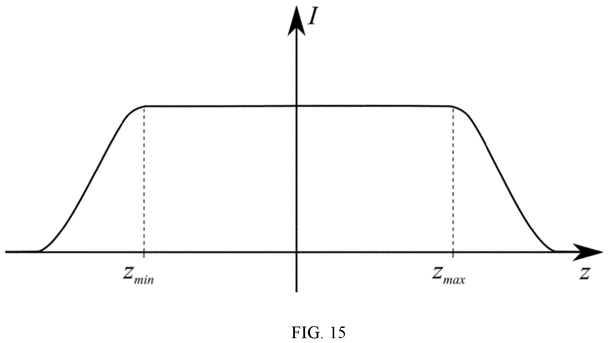

This proposed multi-elliptical mirror was also tested in an inverse mode, as shown in Figure 10. In this case, the point light source 14 was placed on the second focal line 9, and the emitted light was focused on the first focal line 5. The intensity of the focused light along the first focal line 5 is shown in Figure 15. Within the field of view of the multi-elliptical mirror, i.e., between the points $z_{min}$ and $z_{max}$, the light intensity was constant, decreasing at the edges depending on the shape of the part of the reflective mirror surface 6 bounded by the points ABKD and the physical size of the light source 14.

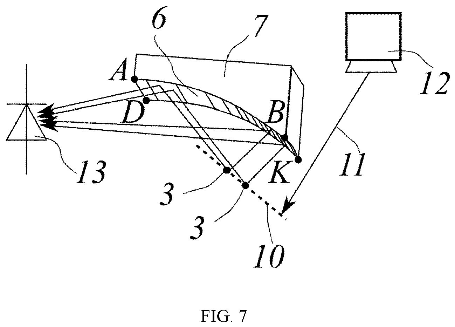

An exemplary implementation of the method of measuring electromagnetic radiation and converting electromagnetic radiation to an electrical signal with this multi-elliptical mirror is shown in Figure 7. The laser beam 11 of a pulsed laser, with pulse lengths ranging from femtoseconds to milliseconds, is deflected by a scanning head 12, and the laser line 10 of the laser beam lies on the first focal line 5 of the ellipses under the mirror body 7. Electromagnetic radiation, in this case, infrared thermal radiation, is emitted from the laser line 10, reflected by the reflective mirror surface 6 bounded by points ABKD, and focused on the detector 13, which is located at the second focus $C_2$ of the elliptical arc. The arrows illustrate the focusing of infrared thermal radiation emitted from the point source 3, which lies on the laser line 10. In this case, the laser line 10 coincides with the first focal line 5. If the radiation source is located outside the focal line 5, the maximum intensity of the radiation will be focused on a point outside the second focal line 9, and the detector will be moved to this point.

In cases of measuring the intensity of electromagnetic radiation and converting electromagnetic radiation to an electrical signal during laser surface processing with pulsed lasers, as shown in Figure 7, it is advantageous to use more than one detector. One of the detectors is chosen to be capable of recording the intensity of electromagnetic radiation in a short time interval ranging from femtoseconds to nanoseconds; at longer times from the impact of the laser pulse, the intensity of the emitted electromagnetic radiation is insufficient for the fast detector. At least one additional detector is chosen to record the intensity of electromagnetic radiation over longer time intervals ranging from nanoseconds to seconds, where the intensity of the emitted electromagnetic radiation remains sufficient for the slower detector at longer times from the impact of the laser pulse.

In the case where the measured electromagnetic radiation is focused on several detectors, these are two different detectors. Their spectral characteristics may be the same, but they have different time constants, which is physically realized by the different sizes of the detectors. The fast detector is usually smaller, and the slower detector is at least four times larger, thus having a larger signal; it does not record rapid events but has more signal at longer times.

The principle illustrated in Figure 7 of focusing electromagnetic radiation using a multi-elliptical mirror is also applicable for detecting electromagnetic radiation from other sources, light scattering and diffusion, refraction, stimulated emission, or photoluminescence, among others.

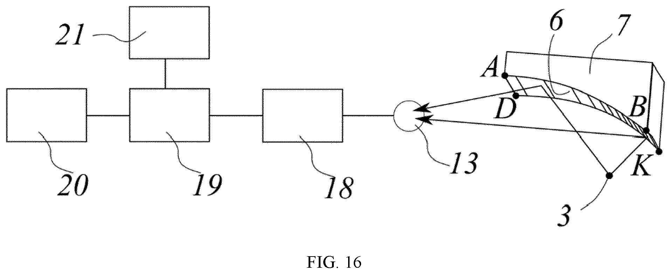

An exemplary implementation of the device for focusing electromagnetic radiation and converting electromagnetic radiation to an electrical signal is shown in Figure 16. The schematic arrangement is as follows. A point source of electromagnetic radiation 1 emits electromagnetic radiation, which is focused by the reflective mirror surface 6 of the mirror body 7 onto the detector 13. The detector 13 converts the electromagnetic radiation into an electrical signal, which is amplified by the amplifier 18. After the amplifier 18, an analog-to-digital converter 19 converts the analog signal into a digital one, which is displayed on the display device 21 and/or stored in the recording device 20.

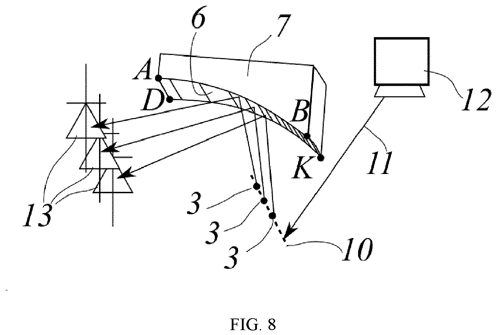

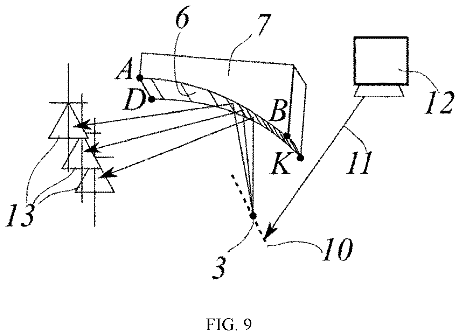

The device for focusing electromagnetic radiation and converting electromagnetic radiation to an electrical signal can be equipped with one or, preferably, more detectors 13, which are installed along the second focal line 9, as shown in Figure 6. The detectors 13 can differ in the spectral range of wavelengths they record, response speed, and sensitivity. Some examples of using the multi-elliptical mirror for measuring infrared thermal radiation with several detectors 13 are shown in Figures 8 and 9. When detectors 13 with different spectral ranges are used, spectrometric measurements can be performed. Such spectral measurement can be used, for example, to determine temperature without knowing the emissivity of the material. In this application, the laser beam 11 is deflected by the scanning head 12, and the laser line 10 of the laser beam lies in the place of the first focal line 5 under the mirror body 7. Electromagnetic radiation emitted from the laser line 10 is reflected by the part of the reflective mirror surface 6 bounded by points ABKD of the mirror body 7 and focused on several detectors 13, which are installed on the second focal line 9 ($x = -c$, $y = 0$, $z$), as shown in Figure 8. Figure 9 shows the mirror body 7, whose part of the reflective mirror surface 6 bounded by points ABKD focuses infrared thermal radiation onto a field of detectors 13 from a single point source 3 in the laser line 10. This optical arrangement functions as a spectrometer or multi-color pyrometer, allowing the determination of the measured surface temperature without knowing the values of emissivity.

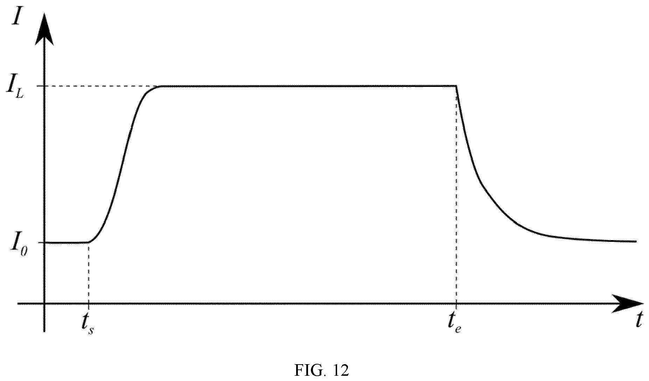

An example of the intensity profile of infrared thermal radiation, as the output of a device for measuring electromagnetic radiation and converting electromagnetic radiation to an electrical signal, is shown in Figure 12. The pulsed laser creates the laser line 10. The intensity of infrared thermal radiation on the detector 13 during laser surface scanning is shown in Figure 12. Before the laser starts emitting, the infrared thermal radiation on the detector corresponds to the background level $I_0$. At time $t_s$, the laser starts emitting, and the created laser line 10, identical to the first focal line 5 on the scanned surface, heats up and emits infrared thermal radiation. The intensity of the infrared thermal radiation increases to the value $I_L$ and becomes constant. At the moment the laser is turned off, the infrared thermal radiation decreases back to the background level $I_0$. The detectable length of the laser scanning line is limited by the two extreme positions of the first focus $C_1$ of the ellipses, which intersect the opposite sides $\overline{AB}$ and $\overline{KD}$ on the part of the reflective mirror surface 6 bounded by points ABKD.

## Industrial Applicability

The invention can be particularly used in workplaces where technological processes cause changes in surface temperature during production. This specifically includes technologies for laser machining and surface structuring, where it is necessary to quickly and efficiently monitor the temperature regime of material processing.

Furthermore, the invention can be used in the field of lighting technology for vehicles, where inverse focusing of radiation from a line source into a point or a field of points creates a defined light flux.

Additionally, the invention can be utilized in distance measurement systems based on the calculation of the travel time of a laser beam reflected from an object (LiDAR).

## List of Reference Marks

1 - arc of the ellipse
2 - beam
3 - point source of electromagnetic radiation
4 - rotational line
5 - first focal line
6 - reflective mirror surface
7 - mirror body
9 - second focal line
10 - laser line
11 - laser beam
12 - scanning head
13 - detector
14 - light source
16 - curved line
17 - ribbed reinforcements
18 - amplifier
19 - analog-to-digital converter
20 - recording device
21 - display device
$C_1$ - first focus of the elliptical arc
$C_2$ - second focus of the elliptical arc
$C_1(z)$ - series of first foci of rotated elliptical arcs
$c$ - focal distance
$c(z)$ - focal distance of rotated elliptical arcs dependent on $z$
$b$ - length of the minor axis of the ellipse

**Claims**

1. A mirror for focusing electromagnetic radiation, **characterized in that** a reflective mirror surface (6) is established on a supporting structure, created by the rotation of elliptical arcs, where the first foci ($C_1$) of all elliptical arcs lie on one line and the second foci ($C_2$) of all elliptical arcs lie at one fixed point, with each elliptical arc being a part of an ellipse described in a Cartesian coordinate system ($x, y, z$) by the following equation:

$$y^2 = b^2 \left( 1 - \frac{x^2}{b^2 + c(z)^2} \right)$$

where $z$ is independent of $x$ and $y$, ($c(z)$) is the focal distance of the rotated elliptical arcs dependent on $z$, ($b$) is the minor axis of the ellipse, and each ellipse has the same position of the second focus ($C_2$) at the point ($x = -c, y = 0, z = 0$) and each ellipse is rotated around the rotational line (4) ($x = -c, y, z = 0$), where ($c$) is the focal distance corresponding to the distance from the focus to the center of the ellipse, placed in the plane {$x, y, 0$}, with each point in the series ($C_1(z)$) of the first foci of the rotated elliptical arcs positioned on the focal line.

2. The mirror for focusing electromagnetic radiation according to claim 1, **characterized in that** the line of the first foci of all elliptical arcs in the Cartesian coordinate system is a straight line ($x = c, y = 0, z$).

3. . The mirror for focusing electromagnetic radiation according to claim 1, **characterized in that** the line of the first foci is a curve and in the Cartesian coordinate system is described by two independent functions ($x = f_1(z), y = f_2(z), z$).

4. The mirror for focusing electromagnetic radiation according to claim 1, **characterized in that** the reflective mirror surface is made of a highly reflective metal, such as aluminum, copper, or gold.

5. The mirror for focusing electromagnetic radiation according to claim 1, **characterized in that** the reflective mirror surface is made of a dielectric material, such as silicon dioxide or silicate glass or ceramics.

6. A method of focusing the intensity of electromagnetic radiation and converting electromagnetic radiation into an electrical signal, **characterized in that** the reflective mirror surface (6), created by the rotation of elliptical arcs, where the first foci (C1) of all elliptical arcs lie on one line and the second foci (C2) of all elliptical arcs lie at one fixed point, with each elliptical arc being a part of an ellipse described in the Cartesian coordinate system (x, y, z) by the following equation:

$$y^2 = b^2 \left( 1 - \frac{x^2}{b^2 + c(z)^2} \right)$$

where $z$ is independent of $x$ and $y$, ($c(z)$) is the focal distance of the rotated elliptical arcs dependent on $z$, ($b$) is the minor axis of the ellipse, and each ellipse has the same position of the second focus ($C_2$) at the point ($x = -c, y = 0, z = 0$) and each ellipse is rotated around the rotational line (4) ($x = -c, y, z = 0$), where ($c$) is the focal distance corresponding to the distance from the focus to the center of the ellipse placed in the plane {$x, y, 0$}, with each point in the series ($C_1(z)$) of the first foci of the rotated elliptical arcs positioned on the focal line, focuses electromagnetic radiation from a line source placed parallel to the series ($C_1(z)$) of the first foci of the rotated elliptical arcs to at least one point on a line parallel to the second focal line (9), where the intensity of the electromagnetic radiation is detected and converted into an electrical signal by changing the electrical characteristic of the photosensitive element in the detector (13), from which the course of electromagnetic radiation in time and space is determined.

7. The method of focusing the intensity of electromagnetic radiation and converting electromagnetic radiation into an electrical signal according to claim 6, **characterized in that** the electromagnetic radiation is thermal radiation in the wavelength range of 0.1 $\mu$m to 14 $\mu$m.

8. The method of focusing the intensity of electromagnetic radiation and converting electromagnetic radiation into an electrical signal according to claim 6, **characterized in that** the course of electromagnetic radiation pulses is determined in time lengths ranging from femtoseconds to milliseconds.

9. The method of focusing the intensity of electromagnetic radiation and converting electromagnetic radiation into an electrical signal according to claim 6, **characterized in that** the electromagnetic radiation is focused on several detectors, where at least one detector records the intensity of electromagnetic radiation in short time intervals ranging from femtoseconds to nanoseconds and at least one detector records the intensity of electromagnetic radiation in longer time intervals ranging from nanoseconds to seconds.

10. A device for focusing and converting electromagnetic radiation into an electrical signal according to the focusing method of claim 6, **characterized in that** to the mirror body (7), on its supporting structure is established a reflective mirror surface (6), created by the rotation of elliptical arcs, where the first foci ($C_1$) of all elliptical arcs lie on one line and the second foci ($C_2$) of all elliptical arcs lie at one fixed point, with each elliptical arc being a part of an ellipse described in the Cartesian coordinate system $(x, y, z)$ by the following equation:

$$y^2 = b^2 \left( 1 - \frac{x^2}{b^2 + c(z)^2} \right)$$

where $z$ is independent of $x$ and $y$, $c(z)$ is the focal distance of the rotated elliptical arcs dependent on $z$, $(b)$ is the minor axis of the ellipse, and each ellipse has the same position of the second focus ($C_2$) at the point ($x = -c, y = 0, z = 0$) and each ellipse is rotated around the rotational line (4) ($x = -c, y, z = 0$), where (c) is the distance from the focus to the center of the ellipse corresponding to the focal distance of the ellipse placed in the plane $\{x, y, 0\}$, with each point in the series ($C_1(z)$) of the first foci of the rotated elliptical arcs positioned on the focal line, is assigned at least one detector (13) of electromagnetic radiation, placed on a line parallel to the second focal line (9) and connected to a recording device (20).

11. A device for focusing and converting electromagnetic radiation into an electrical signal according to claim 10, **characterized in that** between at least one detector (13) and the recording device (20) an amplifier (18) is placed.

12. . A device for focusing and converting electromagnetic radiation into an electrical signal according to claims 10 and 11, **characterized in that** an analog-to-digital converter (19) is established before the recording device (20).

13. A device for focusing and converting electromagnetic radiation into an electrical signal according to claim 12, **characterized in that** a display device (21) is assigned to the analog-to-digital converter (19).

14. A device for focusing and converting electromagnetic radiation into an electrical signal according to claim 10, **characterized in that** the spectral ranges of the detectors do not overlap.

15. A device for focusing and converting electromagnetic radiation into an electrical signal according to claim 10, **characterized in that** the spectral ranges of the detectors partially overlap.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

Europäisches
Patentamt

European
Patent Office

Office européen
des brevets

# EUROPEAN SEARCH REPORT

Application Number

EP 24 18 1872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 336 403 B2 (CANON KK [JP]) 26 February 2008 (2008-02-26) * claim 17; figure 6 * * column 6, paragraph bridging - column 7 * | 1-8, 10-15 | INV. G02B5/10 G02B27/00 G02B27/09 |
| A | WO 2011/013627 A1 (SUZUKI CHIHIRO [JP]) 3 February 2011 (2011-02-03) * figure 4 * | 1-15 | |
| A | US 2021/259771 A1 (SHIMIZU KAZUO [JP] ET AL) 26 August 2021 (2021-08-26) * figure 6 * | 1-15 | |
| A | US 3 774 995 A (PERRET S) 27 November 1973 (1973-11-27) * figure 1 * | 1-15 | |
| A | WO 2015/191387 A1 (VALEO NORTH AMERICA INC [US]) 17 December 2015 (2015-12-17) * figures 1,6 * | 1-15 | |

TECHNICAL FIELDS
SEARCHED      (IPC)

G02B

The present search report has been drawn up for all claims

| Place of search | Date of completion of the search | Examiner |
|---|---|---|
| Munich | 24 October 2024 | Linke, Felix |

EPO FORM 1503 03.82 (P04C01)

EP 4 478 096 A1

## ANNEX TO THE EUROPEAN SEARCH REPORT
## ON EUROPEAN PATENT APPLICATION NO.

EP 24 18 1872

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2024

| Patent document cited in search report | | Publication date | Patent family member(s) | | Publication date |
|---|---|---|---|---|---|
| US 7336403 | B2 | 26-02-2008 | CN | 1469137 A | 21-01-2004 |
| | | | EP | 1367413 A1 | 03-12-2003 |
| | | | US | 2003218811 A1 | 27-11-2003 |
| WO 2011013627 | A1 | 03-02-2011 | JP | 2012137510 A | 19-07-2012 |
| | | | JP | WO2011013627 A1 | 07-01-2013 |
| | | | WO | 2011013627 A1 | 03-02-2011 |
| US 2021259771 | A1 | 26-08-2021 | JP | 7311164 B2 | 19-07-2023 |
| | | | JP | 2023089181 A | 27-06-2023 |
| | | | JP | WO2020017639 A1 | 02-08-2021 |
| | | | US | 2021259771 A1 | 26-08-2021 |
| | | | WO | 2020017639 A1 | 23-01-2020 |
| US 3774995 | A | 27-11-1973 | CH | 522169 A | 30-04-1972 |
| | | | CH | 526071 A | 31-07-1972 |
| | | | DE | 1938114 A1 | 26-03-1970 |
| | | | FR | 2017169 A1 | 22-05-1970 |
| | | | GB | 1233333 A | 26-05-1971 |
| | | | NL | 6912776 A | 24-02-1970 |
| | | | US | 3774995 A | 27-11-1973 |
| WO 2015191387 | A1 | 17-12-2015 | CN | 106537030 A | 22-03-2017 |
| | | | EP | 3152481 A1 | 12-04-2017 |
| | | | US | 2017211775 A1 | 27-07-2017 |
| | | | US | 2020355338 A1 | 12-11-2020 |
| | | | US | 2021396369 A1 | 23-12-2021 |
| | | | US | 2022341556 A1 | 27-10-2022 |
| | | | WO | 2015191387 A1 | 17-12-2015 |

EPO FORM P0459

For more details about this annex : see Official Journal of the European Patent Office, No. 12/82

27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4826299 I, I. Powell
- US 9041762 B2, H. Bai, R. A. Hajjar
- EP 2691803 B1, Lee K. Galbraith
- JP H0557475 A, N. Yukio U. Yuji
- US 5285320 G, G. Hohberg

- WO 20222184551 A1, J. Martan, D. Moskal, M. Honner, C. B. Beltrami, V. Lang
- US 20120183915 A1, N. Merry, S. Moffatt, K. Patalay, D. K. Carlson

**Non-patent literature cited in the description**

- **J. MONTAGU.** *Galvanometric and resonant scanners, NY,* 2004, 417-476
- **M. H. LEE.** Diffractive optics can also be used according to Wide-fan-angle Flat-top Linear Laser Beam Generated by Long-pitch Diffraction Gratings. *Current Optics and Photonics,* October 2021, vol. 5 (5), 500-505

- **C. LIU, Y. GUO.** Flat-Top Line-Shaped Beam Shaping and System Design. *Sensors,* 2022, vol. 22, 4199
- **W.-H. LEE ; W. LEE.** Flat-Top Line-Shaped Beam Shaping and System Design. *Sensors,* 2022, vol. 22, 4199